# EUROPÄISCHE PATENTSCHRIFT

(11) **EP 1 571 019 B1**
(45) Veröffentlichungstag und Bekanntmachung des Hinweises auf die Patenterteilung: **13.06.2007**
(21) Anmeldenummer: 04290598.4
(22) Anmeldetag: 03.03.2004
(51) Int. Cl.: B60H 1/00

(54) **Klimatisierungsvorrichtung, insbesondere für ein Krafffahrzeug**
Air conditioning device, in particular for a motor vehicle
Dispositif de conditionnement d'air, notamment pour véhicule automobile

(43) Veröffentlichungstag der Anmeldung: 07.09.2005
(73) Patentinhaber: Behr France Rouffach SAS, 68250 Rouffach (FR)
(72) Erfinder: Schlachter, Claude, 6840 Wolschwiller (FR)
(74) Vertreter: Grauel, Andreas

(56) Entgegenhaltungen:
- EP-A- 0 845 375
- EP-A- 1 142 734
- WO-A-20/04000586
- US-A1- 2002 157 811

## Beschreibung

Die vorliegende Erfindung betrifft eine Klimatisierungsvorrichtung zur Klimatisierung eines Raumes, insbesondere eines Kraftfahrzeuginnenraumes mit den Merkmalen des Oberbegriffs des Patentanspruchs 1. Dies wird z.B. in der US 2002/0157811 A1 gezeigt.

Bei bekannten Fahrzeugklimaanlagen besteht oftmals das Problem, dass die Luftführungskanäle zwischen Gebläse, Wärmetauscher und Heizeinrichtung mehrfache Umlenkungen aufweisen, was zu einer relativ starken Drosselung der Luftströmung sowie zu einer ausgeprägten Geräuschentwicklung führen kann. Weitere Parameter, welche einen günstigen Luftverlauf verhindern oder erschweren können, sind die im Fahrzeug vorhandenen Einbauverhältnisse. Oftmals lassen sich die gewünschten geradlinigen Luftwege aufgrund des zur Verfügung stehenden Platzes nicht realisieren.

Bei bekannten Klimaanlagen wird kalte und warme Luft in einen Mischraum geführt, von wo aus die Luft zu den Ausströmöffnungen in Richtung Fahrzeuginnenraum geleitet wird. Vom tiefer liegenden Temperaturmischraum strömt die Luft nach oben zu den Defroster- und den Belüftungsdüsen. In Richtung zum Fußraum muss die Luft wieder nach unten geleitet werden. Diese Umlenkungen sind ungünstig wegen des dabei entstehenden Druckabfalls sowie hinsichtlich der Akustik. Dies betrifft insbesondere die langen Umlenkungswege zu den Ausströmöffnungen im Fußraum.

Der vorliegenden Erfindung liegt die Aufgabe zugrunde, eine Klimaanlage zur Innenraumtemperierung beziehungsweise -klimatisierung zur Verfügung zu stellen, die hinsichtlich ihrer Strömungsverhältnisse sowie der Akustik optimiert ist.

Diese Aufgabe wird mit dem Gegenstand des unabhängigen Patentanspruchs gelöst. Merkmale vorteilhafter Weiterbildungen der Erfindung ergeben sich aus den abhängigen Ansprüchen.

Bei einer erfindungsgemäßen Klimatisierungsvorrichtung gemäß Patentanspruch 1 verläuft ein Luftführungskanal zwischen einem Wärmetauscher und einer Heizeinrichtung weitgehend geradlinig und umlenkungsfrei. Auf diese Weise kann der Luftweg in der Klimaanlage sehr kurz und direkt gehalten werden, so dass sowohl ein Druckabfall als auch eine Geräuschentwicklung durch zu starke Umlenkungen des Luftweges vermieden werden kann. Bei der erfindungsgemäßen Klimaanlage liegt der Heizkörper direkt hinter dem Verdampfer, so dass dazwischen keine Umlenkungen notwendig sind. Der Heizkörper wird mit einer Klappe, verschließbaren Schiebereinrichtung o. dgl. verschlossen oder geöffnet. Wird er angeströmt, sorgt er für eine Erwärmung der Luft. Diese Klappe kann ein Rollband sein, eine verschiebbare Klappe oder aus mehreren kleineren Klappen gebildet werden, die durch eine Kinematik miteinander gekoppelt sind.

Im Luftführungskanal parallel zur Heizeinrichtung ist weiterhin ein variabel verschließbarer Bypasskanal zur Kaltluftförderung vorgesehen, wobei der Luftführungskanal zwischen Wärmetauscher und dem Bypasskanal ebenfalls weitgehend geradlinig und umlenkungsfrei verläuft. Aus diese Weise werden Strömungsverluste und Geräuschentwicklungen durch eine stärkere Umlenkung im Luftführungskanal vermieden. Vorzugsweise ist innerhalb des Bypasskanals eine Verschlusseinrichtung angeordnet, die zwischen einer verschlossenen und einer geöffneten Stellung variabel verstellbar ist. Stromaufwärts oder stromabwärts der Heizeinrichtung kann eine weitere Verschlusseinrichtung zur Warmluftzumessung angeordnet sein, die zwischen einer verschlossenen und einer geöffneten Stellung variabel verstellbar ist. Diese weitere Verschlusseinrichtung im Warmluftkanal kann aus mehreren gekoppelten Schwenkklappen gebildet sein oder beispielsweise aus einer oder mehreren verschiebbaren und/oder teilweise aufrollbaren Klappen gebildet sein.

Die Schwenkklappen im Bypasskanal müssen nicht so kompakt wie die Verschlusseinrichtung für den Heizkörper ausgebildet sein, da hier mehr Platz zur Verfügung steht.

Wesentlicher Aspekt der Erfindung ist der unmittelbar hinter dem Verdampfer angeordnete Heizkörper, der sehr kompakte Verschlusseinrichtungen aufweist. Dazwischen gibt es keine nennenswerten Umlenkungen der Luftführung. Weiterhin befindet sich im Bypasskanal eine Leiteinrichtung für die Kaltluft, die eine V-Form aufweist. Hierdurch wird die Kaltluft in zwei Strömungen aufgeteilt, die wahlweise nach oben oder unten geleitet werden können. Der Raum zwischen den beiden Kaltluftwegen wird für die Verteilung der warmen Luftströmung genutzt, die aus dem Heizkörper kommt. Die beiden Warmluftaustritte im Fußbereich und im Bereich der Scheiben sind damit mittig angeordnet, während die Kaltluftwege seitlich verlaufen. Um eine Temperierung der Luft zu erreichen, ist der mittige V-förmige Bereich als Schichtungskanal ausgebildet, der mittels einer Klappe angesteuert wird. Dieser Schichtungskanal führt die kalte Luft in den mittleren Bereich der Anlage, wo sie in die gewünschte Richtung gelenkt werden kann.

Die Erfindung wird nachfolgend in bevorzugten Ausführungsbeispielen anhand der zugehörigen Zeichnungen näher erläutert. Dabei zeigt:
Figur 1 eine schematische Schnittdarstellung einer erfindungsgemäßen Klimatisierungsvorrichtung,
Figuren 2 bis 7 verschiedene schematische Darstellungen zur Verdeutlichung der möglichen Luftführungswege in der Klimatisierungsvorrichtung,
Figur 8 eine perspektivische Prinzipdarstellung der Luftführungswege in einer ersten Betriebsweise der Vorrichtung und
Figur 9 eine perspektivische Prinzipdarstellung der Luftführungswege in einer zweiten Betriebsweise der Vorrichtung.

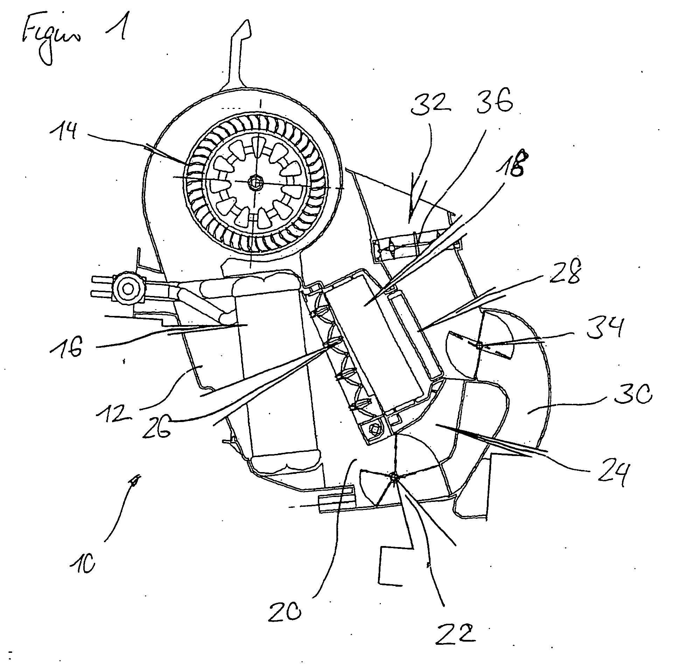

Figur 1 verdeutlicht in einer schematischen Prinzipdarstellung die Anordnung der Komponenten einer erfindungsgemäßen Klimatisierungsvorrichtung 10. In einem Luftführungskanal 12 hinter einem Gebläse 14 ist ein Verdampfer 16 angeordnet, dem stromabwärts ein Heizkörper 18 nachgeordnet ist. Der Heizkörper 18 befindet sich unmittelbar hinter dem Verdampfer 16, so dass der Luftführungskanal 12 zwischen Verdampfer 16 und Heizkörper 18 weitgehend geradlinig und umlenkungsfrei verläuft. Parallel zum Heizkörper 18 und unterhalb diesem liegt ein Bypasskanal 20, der mittels einer verstellbaren Kaltluftklappe 22 variabel verschließbar ist. Stromabwärts des Bypasskanals 20 ist ein V-förmiger Schichtungskanal 24 angeordnet, der im Folgenden noch näher erläutert wird. Vor dem Heizkörper 18 sind eine Reihe von kleineren Verschlussklappen 26 angeordnet, die für eine variable Absperrung des Heizkörpers 18 sorgen können, wenn dieser nicht durchströmt werden soll. Die Verschlussklappen 26 sind so bemessen und angeordnet, dass sie eine nur geringe Ausdehnung in Strömungsrichtung aufweisen.

Hinter dem Heizkörper 18 kann ggf. ein PTC-Zuheizer 28 angeordnet sein, der für eine bedarfsweise Verstärkung der Heizleistung sorgen kann.

Stromabwärts des Heizkörpers 18 sowie des Schichtungskanals 24 sind mehrere Ausströmöffnungen 30, 32 vorgesehen, die mittels schwenkbarer Klappen 34, 36 variabel verschließbar sind.

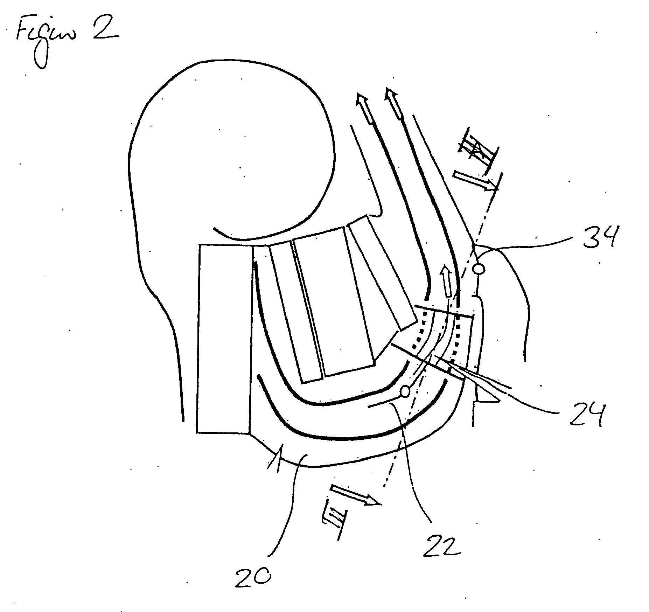

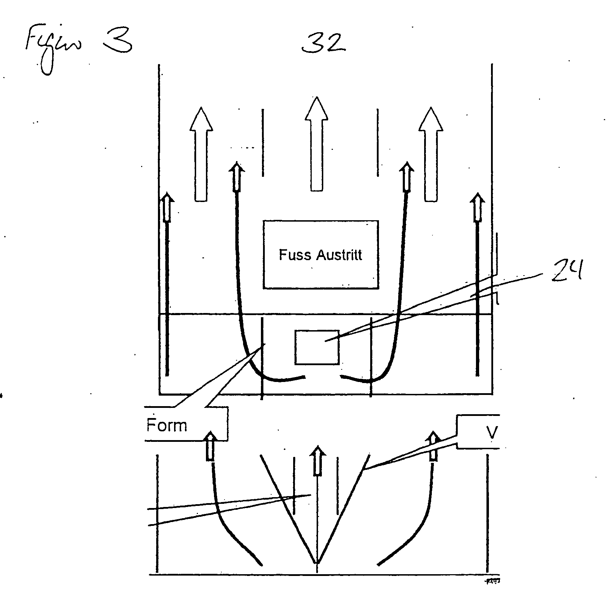

Figur 2 zeigt eine erste Betriebsart der Klimatisierungsvorrichtung 10, bei der die Klappen 26 vor dem Heizkörper 18 verschlossen sind und bei der die Kaltluftklappe 22 im Bypasskanal 20 geöffnet ist. Eine Fußraumklappe 34 ist hierbei ebenfalls geschlossen, so dass die gesamte kalte Luft nach oben in Richtung zu einer Defrosterdüse 32 oder einer Belüftungsöffnung im Fahrzeuginnenraum strömt. Figur 3 zeigt in einem Schnitt III-III entsprechend Figur 2 die Kaltluftverteilung auf die oberen Ausströmöffnungen 32 im Fahrzeuginnenraum. Mittels des V-förmigen Schichtungskanals 24 wird die kalte Luft aufgeteilt und auf eine linke und rechte Belüftungsöffnung sowie ggf. auf Defrosterdüsen gelenkt.

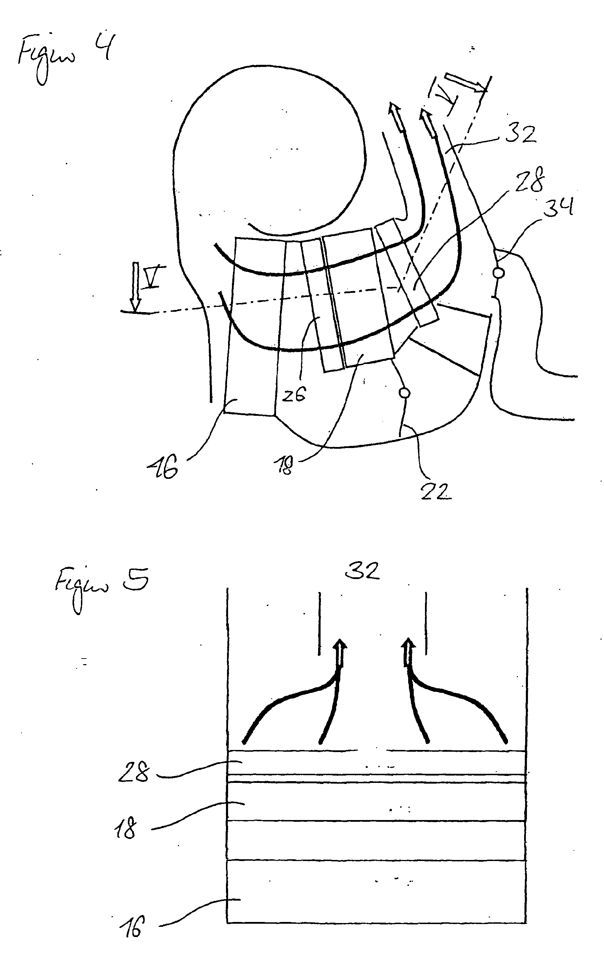

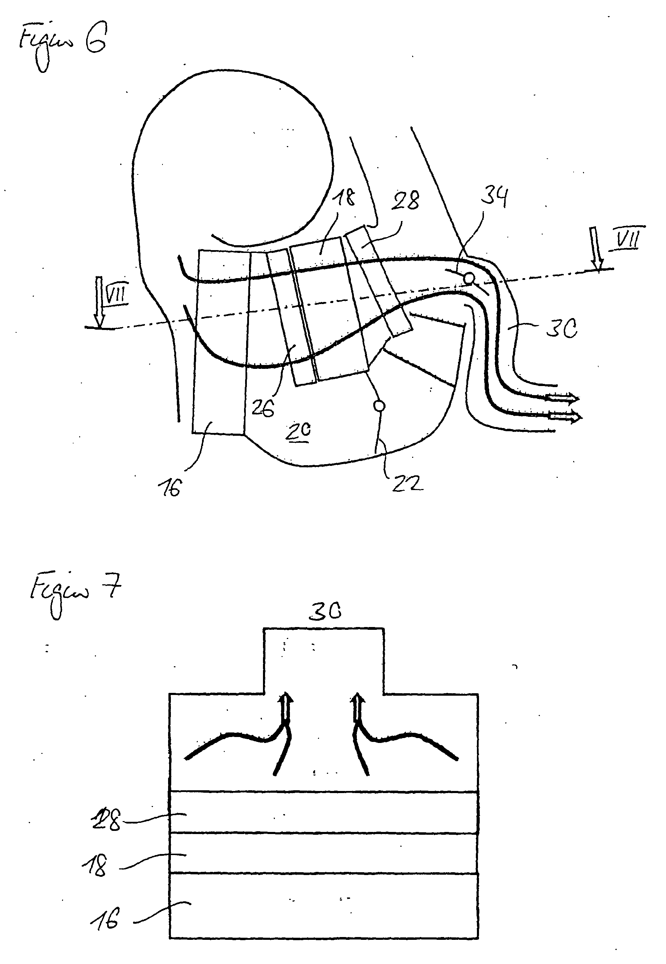

Figur 4 zeigt eine alternative Betriebsart der Klimatisierungsvorrichtung 10, bei der die Kaltluftklappe 22 verschlossen und die Warmluftklappen 26 geöffnet sind. Die Fußraumklappe 34 ist hierbei geschlossen, so dass Warmluft zu den oberen Ausströmöffnungen 32 geleitet wird. Figur 5 verdeutlicht einen Schnitt V-V aus Figur 4, wonach die Luft zu den mittleren Ausströmöffnungen für die Warmluft geleitet wird, nachdem sie Verdampfer 16, Heizkörper 18 und PTC-Element 28 durchströmt hat.

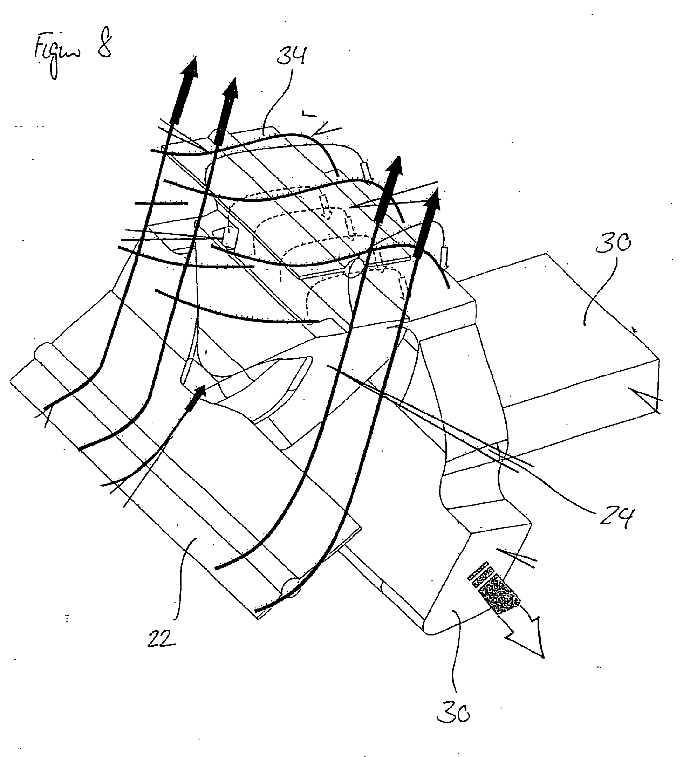

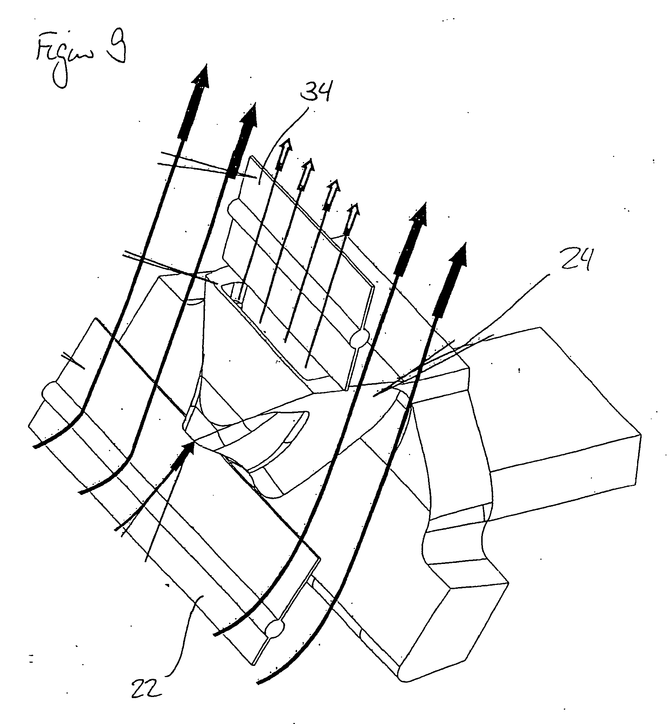

Figur 6 zeigt eine Betriebsart, bei der ausschließlich Warmluft zu den Austrittsöffnungen 30 im Fußraum gefördert wird. Die Kaltluftklappe 22 ist geschlossen, während die Warmluftklappen 26 geöffnet sind. Die Fußraumklappe 34 ist ebenfalls geöffnet. Figur 7 verdeutlicht einen Schnitt VII-VII aus Figur 6, wonach die Luft über die geöffnete Fußraumklappe 34 zu den unteren Ausströmöffnungen 30 geleitet wird, nachdem sie Verdampfer 16, Heizkörper 18 und PTC-Element 28 durchströmt hat.

Die schematische Perspektivdarstellung der Figur 8 verdeutlicht die Luftwege der Klimatisierungsvorrichtung 10 und insbesondere die Vermischung mittels des Schichtungskanals 24. Die Kaltluftklappe 22 im Bypasskanal 20 ist hierbei teilweise geöffnet, so dass kalte Luft durch den Bypasskanal 20 hindurch strömen und in den Schichtungskanal 24 eintreten kann. Ein Teil der kalten Luft wird nach oben geleitet und tritt aus den oberen Ausströmöffnungen 32 (vgl. Figur 1) aus, während ein weiterer Teil der kalten Luft im Schichtungskanal 24 mit warmer Luft aus dem Heizkörper 18 vermischt und über die geöffnete Fußraumklappe 34 als temperierte Luft zu den unteren Ausströmöffnungen 30 im Fußraum geleitet wird. Die seitlich angeordneten Öffnungen 30 können hierbei in einem vorderen Fußraum angeordnet sein, während die mittig angeordnete, breitere Öffnungen in einen hinteren Fußraum des Fahrzeuginnenraums mündet.

Figur 9 verdeutlicht schließlich eine Betriebsweise, bei der ausschließlich kalte Luft nach oben in Richtung zur Belüftung des Fahrzeuginnenraums gefördert wird. Die untere Kaltluftklappe 22 ist geöffnet, so dass die kalte Luft durch die beiden seitlichen Kanäle sowie den V-förmigen Schichtungskanal 24 strömt. Aus diesem tritt die Luft wieder nach oben aus und durchströmt den geöffneten oberen Luftkanal, der in die oberen Ausströmöffnungen 32 mündet. Die Fußraumklappe 34 ist hierbei geschlossen und befindet sich in nahezu senkrechter Stellung, so dass die gesamte kalte Luft aus dem Mischungskanal 24 entlang dieser Klappe 34 nach oben strömen kann.

## Patentansprüche

1. Klimatisierungsvorrichtung zur Klimatisierung eines Raumes, insbesondere eines Kraftfahrzeuginnenraumes, mit einem innerhalb eines Luftführungskanals (12) angeordnet und von zu klimatisierender Luft durchströmbaren Wärmetauscher (16), dem stromabwärts eine durchströmbare Heizeinrichtung (18) nachgeordnet ist und der Luftführungskanal (12) zwischen Wärmetauscher (16) und Heizeinrichtung (18) weitgehend geradlinig und umlenkungsfrei verläuft, wobei im Lüftungskanal (12) parallel zur Heizeinrichtung (16) ein variabel verschließbarer Bypasskanal (20) zur Kaltluftförderung vorgesehen ist, wobei im Bereich stromabwärts des Bypasskanals (20) ein Schichtungskanal (24) angeordnet ist, der einen variabel einstellbaren Teil einer Kaltluftströmung aus dem Bypasskanal (20) abzweigt und in einer ersten Stellung einer nachgeordneten Klappe (34) einer Warmluftströmung aus der Heizeinrichtung zumischt **dadurch gekennzeichnet, dass** der Schichtungskanal (24) einen V-förmigen Querschnitt aufweist.

2. Klimatisierungsvorrichtung nach Anspruch 1, **dadurch gekennzeichnet, dass** der Luftführungskanal (12) zwischen Wärmetauscher (16) und Bypasskanal (20) weitgehend geradlinig und umlenkungsfrei verläuft.

3. Klimatisierungsvorrichtung nach einem der voranstehenden Ansprüche, **dadurch gekennzeichnet, dass** innerhalb des Bypasskanals (20) eine Verschlusseinrichtung (22) angeordnet ist, die zwischen einer verschlossenen und einer geöffneten Stellung variabel verstellbar ist.

4. Klimatisierungsvorrichtung nach einem der voranstehenden Ansprüche, **dadurch gekennzeichnet, dass** stromaufwärts oder stromabwärts der Heizeinrichtung (16) eine weitere Verschlusseinrichtung (26) zur Warmluftzumessung angeordnet ist, die zwischen einer verschlossenen und einer geöffneten Stellung variabel verstellbar ist.

5. Klimatisierungsvorrichtung nach Anspruch 5, **dadurch gekennzeichnet, dass** die weitere Verschlusseinrichtung (26) im Warmluftkanal aus mehreren miteinander gekoppelten Schwenkklappen gebildet ist.

6. Klimatisierungsvorrichtung nach Anspruch 5, **dadurch gekennzeichnet, dass** die weitere Verschlusseinrichtung (26) im Warmluftkanal aus einer oder mehreren verschiebbaren und/oder teilweise aufrollbaren Klappen gebildet ist.

7. Klimatisierungsvorrichtung nach einem der voranstehenden Ansprüche, **dadurch gekennzeichnet, dass** der Schichtungskanal (24) einen variabel einstellbaren Teil der Kaltluftströmung aus dem Bypasskanal (20) abzweigt und in einer zweiten Stellung einer nachgeordneten Klappe (34) wieder der Kaltluftströmung aus dem Bypasskanal (20) zumischt.

## Claims

1. An air conditioning device for air conditioning a space, in particular the interior of a motor vehicle, having a heat exchanger (16) which is positioned inside an air duct (12), through which air to be conditioned is able to flow and downstream of which is positioned a heating device (18) through which air is also able to flow, the air duct (12) between the heat exchanger (16) and the heating device (18) running essentially in a straight line without diversion, there being provided in the air duct (12) parallel to the heating device (18) a variably closable bypass channel (20) for the conveyance of cold air and there being positioned in the area downstream of the bypass channel (20) a flow layering channel (24) which diverts a variably adjustable part of a flow of cold air out of the bypass channel (20) and, in a first position of a downstream damper (34), mixes it with a flow of warm air from the heating device,
**characterised in that**
the flow layering channel (24) has a V-shaped cross section.

2. An air conditioning device in accordance with claim 1,
**characterised in that**
the air duct (12) runs essentially in a straight line without diversion between the heat exchanger (16) and the bypass channel (20).

3. An air conditioning device in accordance with one of the preceding claims,
**characterised in that**
positioned inside the bypass channel (20) is a closing device (22) which can be variably adjusted between a closed and an open position.

4. An air conditioning device in accordance with one of the preceding claims,
**characterised in that**
positioned upstream or downstream of the heating device (16) is a further closing device (26) for the admixing of warm air which can be variably adjusted between a closed and an open position.

5. An air conditioning device in accordance with claim 5,
**characterised in that**
the further closing device (26) in the warm air channel takes the form of several pivoting dampers which are linked together.

6. An air conditioning device in accordance with claim 5,
**characterised in that**
the further closing device (26) in the warm air channel takes the form of one or more movable and/or partially roll-up dampers.

7. An air conditioning device in accordance with one of the preceding claims,
**characterised in that**
the flow layering channel (24) diverts a variably adjustable part of the cold air flow from the bypass channel (20) and, in a second position of a downstream damper (34), mixes it the cold air flow from bypass channel (20) again.

## Revendications

1. Dispositif de conditionnement d'air pour la climatisation d'un espace, en particulier d'un habitacle de véhicule, avec un échangeur de chaleur (16), disposé à l'intérieur d'un conduit de guidage d'air (12) et pouvant être traversé par l'air à conditionner, en aval duquel est disposé un dispositif de chauffage (18) pouvant être traversé et le conduit de guidage d'air (12) est agencé entre l'échangeur de chaleur (16) et le dispositif de chauffage (18) largement en ligne droite et sans déviation, un conduit de dérivation (20) pouvant être fermé de façon variable pour le transport d'air froid étant prévu dans le conduit de guidage (12) parallèlement au dispositif de chauffage (16), un conduit d'empilage (24) étant disposé dans la zone située en aval du conduit de dérivation (20), lequel dévie une partie réglable de façon variable d'un écoulement d'air froid du conduit de dérivation (20) et la mélange dans une première position d'un clapet (34) placé en aval avec un écoulement d'air chaud provenant du dispositif de chauffage, **caractérisé en ce que** le conduit d'empilage (24) présente une section en V.

2. Dispositif de conditionnement d'air selon la revendication 1, **caractérisé en ce que** le conduit de guidage d'air (12) est agencé largement en ligne droite et sans déviation entre l'échangeur de chaleur (16) et le conduit de dérivation (20).

3. Dispositif de conditionnement d'air selon l'une quelconque des revendications précédentes, **caractérisé en ce qu'**un dispositif de fermeture (22) qui peut être réglé de façon variable entre une position fermée et une position ouverte, est disposé à l'intérieur du conduit de dérivation (20).

4. Dispositif de conditionnement d'air selon l'une quelconque des revendications précédentes, **caractérisé en ce qu'**un autre dispositif de fermeture (26) pour la mesure d'air chaud, qui est réglable de façon variable entre une position fermée et une position ouverte, est disposé en amont ou en aval du dispositif de chauffage (16).

5. Dispositif de conditionnement d'air selon la revendication 5, **caractérisé en ce que** l'autre dispositif de fermeture (26) dans le conduit d'air chaud est formé de plusieurs clapets basculants couplés entre eux.

6. Dispositif de conditionnement d'air selon la revendication 5, **caractérisé en ce que** l'autre dispositif de fermeture (26) dans le conduit d'air chaud est formé d'un ou de plusieurs clapets coulissants et/ou partiellement enroulables.

7. Dispositif de conditionnement d'air selon l'une quelconque des revendications précédentes, **caractérisé en ce que** le conduit d'empilage (24) dévie une partie réglable de façon variable de l'écoulement d'air froid du conduit de dérivation (20) et la mélange dans une seconde position d'un clapet (34) placé en aval à nouveau avec l'écoulement d'air froid sortant du conduit de dérivation (20).
